# EUROPÄISCHE PATENTANMELDUNG

(11) **EP 4 740 804 A1**
(43) Veröffentlichungstag der Anmeldung: **13.05.2026**
(21) Anmeldenummer: 24211167.2
(22) Anmeldetag: 06.11.2024
(51) Int. Cl.: A47J 39/00

(54) **TEMPERIERSCHRANK**

(71) Anmelder: ALPINA COFFEE SYSTEMS GmbH, 6322 Kirchbichl (AT)
(72) Erfinder: SIEDLER, Thomas, 6221 Angath (AT)
(74) Vertreter: Torggler & Hofmann Patentanwälte - Innsbruck

(57) **Zusammenfassung**

Temperierschrank (1) zum Warmhalten von Geschirr, mit einem Innenraum (2), wobei der Innenraum (2) in einer Betriebsstellung des Temperierschranks (1) umseitig durch zumindest zwei Vertikalwände (3) begrenzt ist, und wobei sich zwischen den Vertikalwänden (3) zumindest zwei Horizontalebenen (4) erstrecken und lösbar mit den Vertikalwänden (3) verbunden sind, wobei die Vertikalwände (3) und die Horizontalebenen (4) mit einer Doppelwandung ausgebildet sind, wobei an zumindest einer der zumindest zwei Horizontalebenen (4) zumindest ein Heizelement (6) angeordnet ist, wobei das zumindest eine Heizelement (6) an der jeweiligen Horizontalebene (4) angeklebt ist.

## Beschreibung

Die vorliegende Erfindung betrifft einen Temperierschrank zum Warmhalten von Geschirr, mit einem Innenraum, wobei der Innenraum in einer Betriebsstellung des Temperierschranks umseitig durch zumindest zwei Vertikalwände begrenzt ist, und wobei sich zwischen den Vertikalwänden zumindest zwei Horizontalebenen erstrecken und lösbar mit den Vertikalwänden verbunden sind, wobei die Vertikalwände und die Horizontalebenen mit einer Doppelwandung ausgebildet sind, wobei an zumindest einer der zumindest zwei Horizontalebenen zumindest ein Heizelement angeordnet ist.

Temperierschränke dieser Art sind z.B. aus der GB 399835 A und der CH 698735 B1 bekannt. Beim Wärmeschrank der GB 399835 A ist ein komplexes Wasserheizsystem mit Wasser führenden Wasserkanälen vorgesehen, wobei die Wasserkanäle in den Vertikalwänden und Horizontalebenen integriert sind. Und bei der kombinierten Heiz- und Kühlvorrichtung der CH 698735 B1 sind thermo-elektrische Peltiermodule mit einer abkühlbaren Oberseite und einer gegenüberliegenden aufheizbaren Oberseite vorgesehen, wobei die Module die Vorrichtung zwingend in einen kühlen Bereich und einen warmen Bereich teilen. Die genannten bekannten Temperierschränke sind also ungünstigerweise durch eine aufwändige Konstruktion oder eine eingeschränkte Funktion charakterisiert.

Die Aufgabe der vorliegenden Erfindung ist es daher, einen zum Stand der Technik verbesserten Temperierschrank bereitzustellen, insbesondere welcher besonders einfach aufgebaut und herstellbar ist.

Diese Aufgabe wird durch die Merkmale des Anspruchs 1 gelöst, nämlich durch einen Temperierschrank der eingangs genannten Art, bei welchem das zumindest eine Heizelement an der jeweiligen Horizontalebene angeklebt ist.

Ein erster großer Vorteil der Erfindung ist, dass das zumindest eine Heizelement schnell und einfach an der jeweiligen Horizontalebene anbringbar ist und keinerlei komplizierter Konstruktionen oder Befestigungsmechanismen bedarf.

Ein weiterer Vorteil ist, dass durch das Ankleben eine verlustarme Wärmeübertragung von dem zumindest einen Heizelement auf die jeweilige Horizontalebene und folglich auf etwaiges darauf gelagertes Geschirr etc. möglich ist. Eine derartige Wärmeübertragung durch Wärmeleitung ist insbesondere beim Lagern von Kaffeetassen vorteilhaft, da der Kaffee sein Aroma in vorgewärmten Tassen optimal entfalten kann.

Die Wärmeübertragung oder Wärmeleitung erfolgt vorzugsweise direkt oder unmittelbar vom zumindest einen Heizelement auf die jeweilige Horizontaleben und auf das Geschirr etc.

Die Wärmeübertragung kann grundsätzlich auch mittelbar über weitere Komponenten, welche zwischen dem zumindest einem Heizelement und der jeweiligen Horizontalebene und/oder dem Geschirr etc. sind, erfolgen.

Neben der mittelbaren und/oder unmittelbaren Wärmeleitung kann das Geschirr etc. im Innenraum zusätzlich auch durch Wärmekonvektion temperiert, insbesondere erwärmt, werden.

Der Temperierschrank ist insbesondere zum Warmhalten von Geschirr, wie z.B. Tassen, Teller, Besteck oder dergleichen, vorgesehen, kann aber auch zum Warmhalten anderer Güter und/oder auch Lebensmittel, wie Speisen und/oder Getränke seinen Einsatz finden.

Der Innenraum des Temperierschranks ist insbesondere als ein, vorzugsweise würfel- oder quaderförmiges, Volumen des durch Außenseiten begrenzten Temperierschranks zu verstehen.

Die Horizontalebenen dienen insbesondere dazu, den Innenraum des Temperierschranks abzugrenzen und/oder Güter, wie z.B. Tassen, zu tragen.

Die Horizontalebenen sind in der Betriebsstellung des Temperierschranks vorzugsweise horizontal ausgerichtet angeordnet.

Zumindest eine Horizontalebene kann aber auch leicht geneigt angeordnet sein, insbesondere verursacht durch Fertigungstoleranzen und/oder wenn ein auf der Horizontalebene gelagertes Gut gewollt in eine vorbestimmte Richtung, beispielsweise gegen eine Rückwand und/oder eine Seitenwand, rutschen soll.

Die Doppelwandung der Horizontalebenen besteht insbesondere aus einem in Betriebsstellung nach unten gewandten Blech und einem davon beabstandeten, nach oben gewandten Blech.

Die Doppelwandung der Vertikalwände besteht insbesondere aus einem nach innen gewandten, d.h. dem Innenraum zugewandten, Blech und einem davon beabstandeten, nach außen gewandten Blech.

Die Horizontalebenen sind mit den Vertikalwänden, insbesondere an ihren nach innen gewandten Blechen und/oder vorzugsweise durch Einhaken und/oder Einrasten, verbunden.

In besonders bevorzugten Ausführungsbeispielen ist das zumindest eine Heizelement innerhalb der Doppelwandung, vorzugsweise am nach oben gewandten Blech, zumindest einer Horizontalebene angeklebt.

Vorzugsweise ist das zumindest eine Heizelement an einer in der Betriebsstellung nach unten gerichteten Oberfläche des nach oben gewandten Blechs der Doppelwandung zumindest einer der Horizontalebenen angeklebt.

In manchen Ausführungsbeispielen ist das zumindest eine Heizelement an einer in der Betriebsstellung nach unten gerichteten Unterseite zumindest einer Horizontalebene angeklebt.

Weitere vorteilhafte Ausführungsformen der Erfindung werden in den abhängigen Ansprüchen definiert.

Es kann vorgesehen sein, dass das zumindest eine Heizelement eine Leistung von maximal 43 Watt aufweist. So wird z.B. weniger Energie verbraucht als bei Heizelementen mit einer höheren Leistung.

Es ist besonders bevorzugt vorgesehen, dass das zumindest eine Heizelement ein Folienheizelement ist, vorzugsweise welches mit 230 V und 50 Hz Wechselstrom betreibbar ist und/oder aus mehreren Polyethylenterephthalat (PET)-Schichten und aufgedruckten, silberhaltigen Heizbahnen besteht. Durch den Einsatz derartiger Heizelemente, welche im Allgemeinen bekannt sind, werden komplexe Heizmechanismen vorteilhafterweise vermieden.

In bevorzugten Ausführungsbeispielen sind die zumindest zwei Vertikalwände zumindest zwei zueinander parallele Seitenwände.

Vorzugsweise umfassen die zumindest zwei Vertikalwände weiters eine Vertikalwand, welche den Innenraum als Rückwand begrenzt und welche mit den zwei Seitenwänden, vorzugsweise rechtwinklig zueinander, verbunden ist. Eine Rückwand kann dazu dienen, die Wärmeisolation nach außen hin weiter zu verbessern.

Es ist bevorzugt vorgesehen, dass eine Horizontalebene der zumindest zwei Horizontalebenen eine in der Betriebsstellung des Temperierschranks den Innenraum unten begrenzende Bodenebene ist und/oder eine Horizontalebene der zumindest zwei Horizontalebenen eine in der Betriebsstellung des Temperierschranks den Innenraum oben begrenzende Dachebene ist.

In einer besonders bevorzugten Ausführungsform ist der Innenraum würfel- oder quaderförmig und umseitig durch drei Vertikalwände und zwei Horizontalebenen nach außen hin begrenzt, wobei diese Wände und Ebenen insbesondere ein Gehäuse mit einer offenen vertikalen Front bilden.

Es ist besonders bevorzugt vorgesehen, dass an jeder Vertikalwand zumindest ein sich in der Betriebsstellung des Temperierschranks vertikal erstreckendes Aussteifungsprofil zur Lastübertragung angeordnet ist.

Vorzugsweise ist das zumindest eine Aussteifungsprofil zur Aufnahme der gesamten Belastung ausgebildet. D.h. insbesondere, dass es Lasten, welche auf die Horizontalebenen und Vertikalwände wirken, vollständig abträgt.

Es ist bevorzugt vorgesehen, dass das zumindest eine Aussteifungsprofil einen Omega-förmigen und/oder U-förmigen Querschnitt aufweist. Dies bietet vorteilhafterweise eine große Steifigkeit bei einem geringen Materialeinsatz.

Es kann vorgesehen sein, dass das zumindest eine Aussteifungsprofil durch CNC-Lasern und/oder durch Biegen herstellbar ist.

Besonders bevorzugt erstreckt sich das zumindest eine Aussteifungsprofil über eine Gesamthöhe der zumindest einen Vertikalwand und/oder einer Höhe des Temperierschranks. So kann z.B. eine günstige durchgängige vertikale Lastabtragung ermöglicht werden.

In bevorzugten Ausführungsbeispielen ist das zumindest eine Aussteifungsprofil genau vier Aussteifungsprofile, vorzugsweise wobei jeweils zwei Aussteifungsprofile an einer Seitenwand angeordnet sind.

Vorzugsweise ist das zumindest eine Aussteifungsprofil innerhalb der Doppelwandung der zumindest einen Vertikalwand angeordnet.

Wenn das zumindest eine Aussteifungsprofil innerhalb der Doppelwandung angeordnet ist und einen Omega- und/oder U-förmigen Querschnitt aufweist, ist das Aussteifungsprofil besonders bevorzugt derart orientiert angeordnet, dass der dreiseitig umschlossene Querschnittsbereich des Querschnitts nach innen gewandt und von dem nach außen gewandten Blech der Doppelwandung beabstandet angeordnet ist. Durch eine derartige Anordnung erfolgt eine optimale Wärmeisolierung nach außen hin, was wiederum zu einem geringeren Energieverbrauch führen kann.

Vorzugsweise ist das zumindest eine Aussteifungsprofil mit Omega- und/oder U-förmigen Querschnitt nach innen hin, d.h. in Richtung des Innenraums, offen und unverdeckt.

Vorzugsweise grenzt das nach innen gerichtete Blech der Doppelwandung der Vertikalwand an den dreiseitig umschlossenen Bereich des Omega- und/oder U-förmigen Querschnitts an, deckt diesen Bereich also nicht ab.

Bei einem besonders bevorzugten Ausführungsbeispiel des Temperierschranks sind in jeder der Doppelwandungen der zwei Seitenwände jeweils zwei Aussteifungsprofile angeordnet, vorzugsweise wobei die Aussteifungsprofile in den Endbereichen der Seitenwände und/oder entlang der vertikalen Eckbereiche des Temperierschranks angeordnet sind.

Die Aussteifungsprofile können insbesondere bei einer Anordnung in den Eckbereichen als eine Stabilisierungs- und/oder Tragkonstruktion verstanden werden, welche vorteilhafterweise alle auftretenden Kräfte sicher aufnehmen und abtragen kann.

Es ist auch denkbar, dass weitere horizontal und/oder geneigt angeordnete Aussteifungsprofile und/oder Zugstäbe zur Stabilisierung des Temperierschranks vorgesehen sind, wobei diese vorzugsweise innerhalb der Doppelwandungen angeordnet sind. Beispielsweise kann zumindest ein Aussteifungsprofil und/oder Zugstab innerhalb der Doppelwandung zumindest einer Horizontalebene angeordnet sein.

Eine Anordnung des zumindest einen Aussteifungsprofils und/oder zumindest eines Zugstabs innerhalb der Doppelwandung von zumindest einer Vertikalwand und/oder Horizontalebene bedingt, dass das zumindest eine Aussteifungsprofil und/oder der zumindest eine Zugstab von außen unsichtbar ist bzw. sind und insbesondere nicht absteht bzw. abstehen, sodass innerhalb des Temperierschranks glatte Oberflächen vorherrschen. So können alle Innenflächen des Temperierschranks einfach gereinigt werden und es besteht dabei keinerlei Verletzungsgefahr beim Hantieren in oder um den Temperierschrank.

Es ist besonders bevorzugt vorgesehen, dass die Doppelwandung der Vertikalwände und Horizontalebenen aus zwei voneinander beabstandeten Blechen gebildet ist.

Es ist besonders bevorzugt vorgesehen, dass die Bleche der Vertikalwände und der Horizontalebenen und/oder das zumindest eine Aussteifungsprofil aus Edelstahl gefertigt sind.

Es ist denkbar, dass die Bleche und/oder Aussteifungsprofile und/oder andere Teilkomponenten des Temperierschranks zumindest teilweise aus Stahl und/oder Kupfer bestehen.

Es kann vorgesehen sein, dass der Temperierschrank, vorzugsweise vier, Fußelemente aufweist, insbesondere wobei die Fußelemente zur direkten Lastübertragung im Wesentlichen unter vier Aussteifungsprofilen angeordnet sind.

Die Fußelemente können höhenverstellbar ausgebildet sein, insbesondere um etwaige Unebenheiten eines Untergrunds auszugleichen.

In bevorzugten Ausführungsbeispielen ist es vorgesehen, dass die zumindest zwei Horizontalebenen in in der Betriebsstellung vertikale Richtung höhenverstellbar sind, insbesondere wobei die Vertikalwände, vorzugsweise die Seitenwände, eine Höhenverstellvorrichtung aufweisen, mit welcher die Horizontalebenen lösbar verbindbar sind.

Die Höhenverstellvorrichtung kann z.B. aus mindestens zwei miteinander korrespondierende Nut- und Federelemente bestehen, wobei an zumindest zwei Vertikalwänden, insbesondere den Seitenwänden, mehrere in vertikale Richtung versetzte Nuten und an zumindest einer Horizontalebenen mindestens eine Feder angeordnet ist; oder umgekehrt. Eine Höhenverstellvorrichtung erlaubt es vorteilhafterweise, den Innenraum anhand zumindest einer Horizontalebene entsprechend einer Größe oder Höhe eines Guts, wie z.B. einzelne und/oder gestapelte Tassen, so anzupassen, dass der Innenraum bestmöglich ausgenützt werden kann.

Die Höhenverstellvorrichtung kann z.B. auch so ausgebildet sein, dass in den Seitenwänden vertikal versetzt beabstandete Bohrungen vorgesehen sind, in welche Verbindungsmittel wie z.B. Schrauben eingeführt und mit den zumindest zwei Horizontalebenen lösbar verbunden sind.

In einer bevorzugten Ausführungsvariante können die Horizontalebenen federartige Zapfen- oder Hakenelemente aufweisen, welche mit einer Reihe von vertikal versetzten nutartigen Öffnungen in den Vertikalwänden lösbar in Eingriff bringbar sind.

In einer bevorzugten Ausführungsvariante sind die Nuten und Federn so ausgerichtet, dass die jeweilige Horizontalebene auf einer ausgewählten Höhe im Wesentlichen horizontal einschiebbar ist, um die Nuten und Federn miteinander in Eingriff zu bringen.

Es ist bevorzugt vorgesehen, dass der Innenraum einen Wärmebereich aufweist, welcher in in der Betriebsstellung vertikale Richtung oben und unten durch jeweils eine Horizontalebene begrenzt ist und optional durch zumindest eine weitere Horizontalebene in Teilwärmebereiche unterteilt oder unterteilbar ist, wobei an zumindest einer, vorzugsweise der Horizontalebenen jeweils zumindest ein Heizelement angebracht ist. Durch das Vorsehen eines Wärmebereichs, ist es günstigerweise möglich, nur das tatsächlich benötigte Volumen im Innenraum zu beheizen. Dies kann zur Energieeinsparung beitragen.

In Kombination mit der Höhenverstellvorrichtung sind die Höhen der jeweiligen Teilwärmebereiche günstigerweise variabel einstellbar.

Es kann vorgesehen sein, dass der Innenraum zumindest einen, insbesondere vom Wärmebereich verschiedenen, Kühlbereich aufweist, welcher in in der Betriebsstellung vertikale Richtung oben und unten durch jeweils eine Horizontalebene begrenzt ist, wobei der Kühlbereich zur Aufnahme zumindest eines Kühlschranks ausgebildet ist und/oder zumindest einen Kühlschrank enthält. Durch die Kombination von einem Wärmebereich mit zumindest einem Kühlbereich ist der Temperierschrank vorteilhafterweise vielseitig einsetzbar.

Es ist bevorzugt vorgesehen, dass der Temperierschrank dazu ausgelegt ist, einen Kleinkühlschrank mit vier Litern Fassungsvolumen und einer Leistung von 70 W zu enthalten.

Es ist denkbar, dass der Kühlschrank einen Flüssigkeitsbehälter zur Aufnahme von Flüssigkeit, z.B. Milch, aufweist, vorzugsweise wobei der Flüssigkeitsbehälter einen Füllstandsensor umfasst.

Es kann vorgesehen sein, dass der Temperierschrank dazu ausgebildet ist, eine Oberflächentemperatur der zumindest zwei Horizontalebenen auf zwischen 60 und 80°C, vorzugsweise zwischen 66 und 70°C, besonders bevorzugt auf 68°C, zu bringen.

Es kann vorgesehen sein, dass der Temperierschrank dazu ausgebildet ist, die Oberflächentemperatur der zumindest zwei Horizontalebenen auf zwischen 60 und 80°C, vorzugsweise zwischen 66 und 70°C, besonders bevorzugt auf 68°C, zu halten. Z.B. können dadurch auf einfache Weise Kaffeetassen, welche auf den Horizontalebenen gelagert sind, auf eine für die Aromaentfaltung des Kaffees optimale Temperatur vorgewärmt werden.

In besonders bevorzugten Ausführungsbeispielen weist der Innenraum vier in in der Betriebsstellung vertikale Richtung begrenzende vertikale Außenseiten auf, wobei genau drei der vier vertikalen Außenseiten durch Vertikalwände begrenzt sind. D.h. insbesondere, dass eine offene Vorderseite bzw. Front des Temperierschranks permanent offen ist. So können auf bedienerfreundliche Weise Geschirr, Tassen und/oder Speisen einerseits bei Bedarf rasch aus dem Innenraum entnommen werden; andererseits lässt sich der Innenraum auch unkompliziert und schnell wieder mit Gütern füllen.

Es kann vorgesehen sein, dass der Innenraum zumindest eine Beleuchtung, insbesondere zumindest ein LED-Leuchtband, aufweist. Eine Beleuchtung des Innenraums erleichtert z.B. die Reinigung des Temperierschranks.

Vorzugsweise ist zumindest ein LED-Leuchtband an dem zumindest einen Aussteifungsprofil angebracht, besonders bevorzugt in Längsrichtung eines Aussteifungsprofils mit einem Omega- und/oder U-förmigen Querschnitt, wobei das zumindest eine LED-Leuchtband innerhalb des dreiseitig umschlossenen Bereichs des Omega- und/oder U-förmigen Querschnitts angeklebt ist. Diese Anordnung kann vorteilhafterweise eine Lichtreflexion bewirken und so bei reduziertem Energieaufwand die Helligkeit des erzeugten Lichts im Innenraum erhöhen.

Es ist möglich, dass der Innenraum des Temperierschranks zumindest in einem Teilbereich einer vertikalen Außenseite, welche nicht durch Vertikalwände begrenzt ist, eine Tür aufweist.

Vorzugsweise ist die wenigstens eine Tür zum Verschließen des Wärmebereichs ausgebildet, sodass die Temperatur vorteilhafterweise besonders gut konstant haltbar ist.

Es ist denkbar, dass der Temperierschrank eine Steuer- oder Regeleinheit aufweist oder mit einer Steuer- oder Regeleinheit verbindbar ist, wobei die Steuer- oder Regeleinheit dazu konfiguriert ist, das zumindest eine Heizelement, insbesondere in Abhängigkeit eines Volumens und/oder eines Inhalts des Innenraums und/oder zumindest eines Teilbereichs des Innenraums, und vorzugsweise die Beleuchtung bzw. das zumindest eine LED-Leuchtband zu steuern oder zu regeln.

In bevorzugten Ausführungsvarianten weist der Temperierschrank Maße von ca. 30x67x45 cm (BxHxT) und/oder ein Gewicht von 25-27 kg und/oder eine Leistung von 180-200 W auf.

Weitere Vorteile und Einzelheiten vorteilhafter Varianten der Erfindung ergeben sich aus den Figuren sowie der dazugehörigen Figurenbeschreibung. Dabei zeigen:
- Fig. 1-7: Darstellungen eines erstes Ausführungsbeispiels eines erfindungsgemäßen Temperierschranks,
- Fig. 8: eine Ansicht eines zweiten Ausführungsbeispiels eines erfindungsgemäßen Temperierschranks und
- Fig. 9-11: Darstellungen eines dritten Ausführungsbeispiels eines erfindungsgemäßen Temperierschranks.

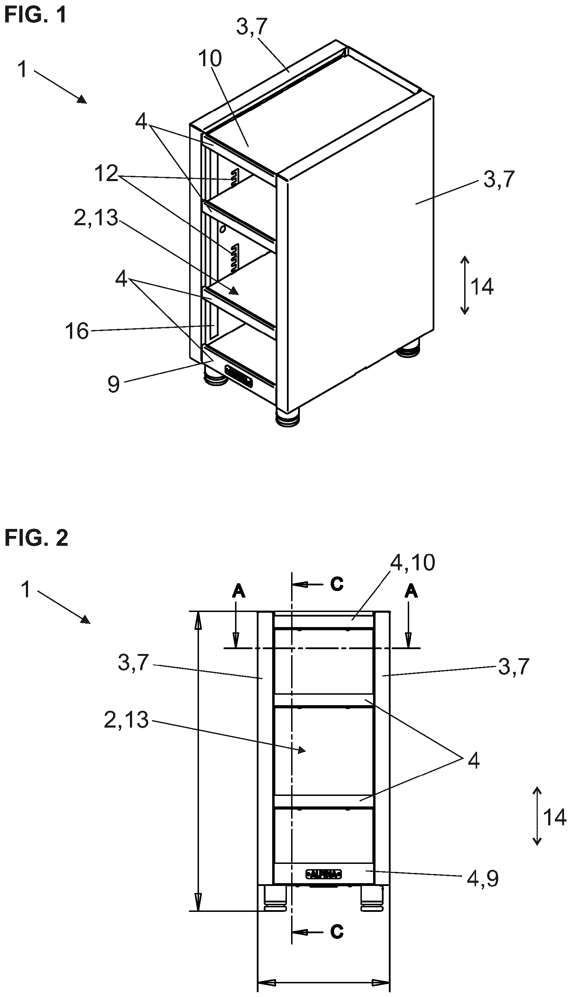

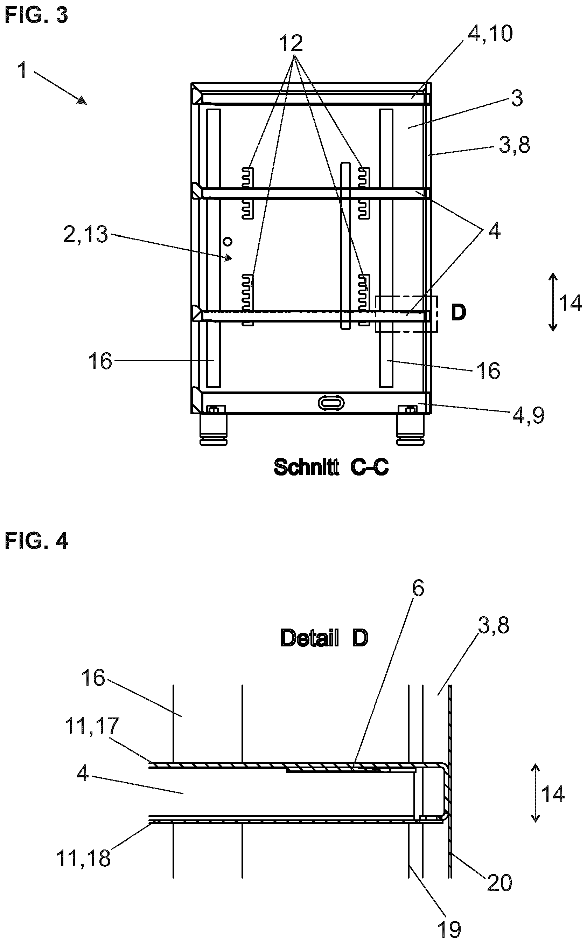

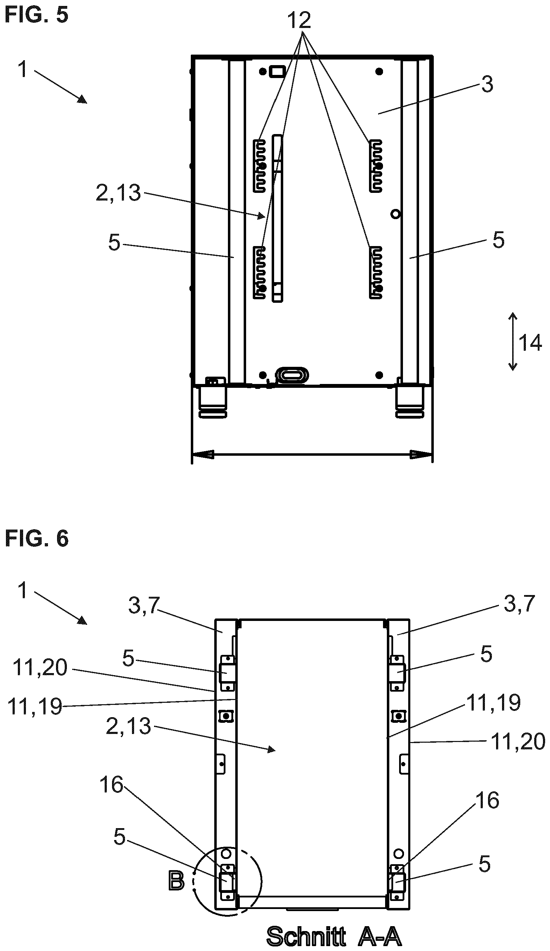

Die Fig. 1 zeigt eine perspektivische Darstellung eines erfindungsgemäßen Temperierschranks 1 zum Warmhalten von Geschirr, mit einem Innenraum 2, wobei der Innenraum 2 in einer Betriebsstellung des Temperierschranks 1 umseitig durch zumindest zwei Vertikalwände 3 begrenzt ist, und wobei sich zwischen den Vertikalwänden 3 zumindest zwei Horizontalebenen 4 erstrecken und lösbar mit den Vertikalwänden 3 verbunden sind, wobei die Vertikalwände 3 und die Horizontalebenen 4 mit einer Doppelwandung ausgebildet sind, vorzugsweise wobei an jeder Vertikalwand 3 zumindest ein sich in der Betriebsstellung des Temperierschranks 1 vertikal erstreckendes Aussteifungsprofil 5 (gezeigt in Fig. 5-7) zur Lastübertragung angeordnet ist, und wobei an zumindest einer der zumindest zwei Horizontalebenen 4 zumindest ein Heizelement 6 (gezeigt in Fig. 4) angeordnet ist, wobei das zumindest eine Heizelement 6 an der jeweiligen Horizontalebene 4 angeklebt ist.

Bei diesem Ausführungsbeispiel umfassen die zumindest zwei Vertikalwände 3 vorzugsweise zumindest zwei zueinander parallele Seitenwände 7.

Bei diesem Ausführungsbeispiel ist eine Horizontalebene 4 der zumindest zwei Horizontalebenen 4 eine in in der Betriebsstellung vertikale Richtung 14 des Temperierschranks 1 den Innenraum 2 unten begrenzende Bodenebene 9 und eine Horizontalebene 4 der zumindest zwei Horizontalebenen 4 eine in in der Betriebsstellung des Temperierschranks 1 vertikale Richtung 14 den Innenraum 2 oben begrenzende Dachebene 10.

Bei diesem Ausführungsbeispiel sind die zumindest zwei Horizontalebenen 4 in vertikale Richtung 14 höhenverstellbar, insbesondere wobei die Vertikalwände 3, vorzugsweise die Seitenwände 7, eine Höhenverstellvorrichtung 12 aufweisen, mit welcher die Horizontalebenen 4 lösbar verbindbar sind.

Bei diesem Ausführungsbeispiel ist der gesamte Innenraum 2 in in der Betriebsstellung vertikale Richtung 14 als Wärmebereich 13 ausgebildet, wobei der Wärmebereich 13 oben und unten durch jeweils eine Horizontalebene 4, insbesondere durch die Dachebene 10 und Bodenebene 9, begrenzt ist und optional durch zumindest eine weitere Horizontalebene 4 in Teilwärmebereiche unterteilt ist, wobei an zumindest einer der Horizontalebenen 4 jeweils zumindest ein Heizelement 6 angebracht ist.

Dieses Ausführungsbeispiel des Temperierschranks 1 ist vorzugsweise dazu ausgebildet, zumindest einen durch zumindest zwei Horizontalebenen 4 und zumindest zwei Vertikalwände 3 umseitig begrenzten Bereich, insbesondere den Wärmebereich 13, auf einen vorbestimmten Innenraumtemperaturbereich und/oder einen vorbestimmten Oberflächentemperaturbereich der zumindest zwei Horizontalebenen 4 bringen und/oder zu halten.

Bei diesem Ausführungsbeispiel weist der Innenraum 2 zumindest eine Beleuchtung 16, insbesondere zumindest ein LED-Leuchtband, auf.

Die Fig. 2 zeigt eine Vorderansicht desselben ersten Ausführungsbeispiels. Hier ist anzumerken, dass sich bei diesem Ausführungsbeispiel der Wärmeberich 13 über den gesamten Innenraum 2 erstreckt und drei Teil-Wärmebereiche aufweist.

Die Fig. 3 zeigt den in Fig. 2 gekennzeichneten Vertikalschnitt C-C in vertikale Richtung 14. Hier ist insbesondere die optionale Höhenverstellvorrichtung 14 gezeigt, wobei sie bei diesem Ausführungsbeispiel aus mehreren Teilschienen mit Nuten besteht, in welche korrespondierende Federelemente der Horizontalebenen 4 eingreifen können.

Die Höhenverstellvorrichtung 14 ist bei diesem Ausführungsbeispiel so ausgebildet, dass die Horizontalebenen 4 im Wesentlichen horizontal eingeschoben werden können (hier von links nach rechts).

Diese Figur zeigt weiters, dass die zumindest zwei Vertikalwände 3 vorzugsweise eine den Innenraum 2 begrenzende Rückwand 8, welche mit den zwei Seitenwänden 7, vorzugsweise rechtwinklig, verbunden ist, umfassen.

Der Innenraum 2 weist insbesondere vier in vertikale Richtung 14 begrenzende vertikale Außenseiten auf, wobei also vorzugsweise genau drei der vier vertikalen Außenseiten des Innenraums 2 durch Vertikalwände 3 begrenzt sind.

Die Fig. 4 zeigt die in Fig. 3 gekennzeichnete Detailansicht D, d.h. einen Ausschnitt eines Vertikalschnitts in vertikale Richtung 14 durch den Temperierschrank 1 im Bereich des Anschlusses einer Horizontalebene 4 mit einer Vertikalwand 3 bzw. Seitenwand 8.

Hier ist zu sehen, dass die Doppelwandung der Horizontalebenen 4 vorzugsweise aus zwei voneinander beabstandete Bleche 11, d.h. ein oberes Blech 17 und ein unteres Blech 18, gebildet ist, wobei die Bleche 11 vorzugsweise eine Stärke von maximal 2 mm aufweisen und/oder aus Edelstahl gefertigt sind.

In dieser Figur ist auch die Anordnung des zumindest einen Heizelements 6 an einer Horizontalebene 4 gezeigt, wobei das Heizelement 6 vorzugsweise am oberen Blech 17 angeklebt ist.

Es können auch mehrere Heizelemente 6 an einer Horizontalebene 4 angeklebt sein, wobei auch denkbar ist, dass zumindest eine Heizelement 6 am unteren Blech 18 angeklebt ist.

Vorzugsweise ist das zumindest eine Heizelement 6 als ein Folienheizelement ausgebildet.

Die Fig. 5 zeigt einen weiteren Vertikalschnitt in vertikale Richtung 14 durch den Temperierschrank 1, wobei vor allem gezeigt ist, dass sich das vorzugsweise vorgesehene zumindest eine Aussteifungsprofil 5, welches vorzugsweise CNC-gelasert ist, über eine Gesamthöhe zumindest einer Vertikalwand 3 erstreckt.

Die Fig. 6 zeigt den in Fig. 2 gekennzeichneten Horizontalschnitt A-A durch den Temperierschrank 1, wobei der Querschnitt des zumindest einen Aussteifungsprofils 5 gut gezeigt ist. Hier ist der Querschnitt U-förmig, er kann aber auch Omega-förmig sein oder eine andere Form aufweisen.

Hier ist weiters gezeigt, dass das zumindest eine Aussteifungsprofil 5 besonders bevorzugt genau vier Aussteifungsprofile 5 ist und/oder innerhalb der Doppelwandung der Vertikalwände 3, insbesondere Seitenwände 7, angeordnet ist.

Bei diesem Ausführungsbeispiel weist der Innenraum 2 zumindest eine Beleuchtung 16, insbesondere zumindest ein LED-Leuchtband, auf, vorzugsweise welche an dem zumindest einen Aussteifungsprofil 5 angebracht ist, besonders bevorzugt in Längsrichtung des Aussteifungsprofils 5 innerhalb eines dreiseitig umschlossenen Bereichs des Omega- und/oder U-förmigen Querschnitts angeklebt ist.

Weiters ist zu sehen, dass die Doppelwandung der Vertikalwände aus zwei voneinander beabstandete Bleche 11, d.h. einer inneren Blech 19 und einem äußeren Blech 20, gebildet ist, wobei die Bleche 11 und vorzugsweise das Aussteifungsprofil 5 eine Stärke von maximal 1 mm aufweisen und/oder aus Edelstahl gefertigt sind.

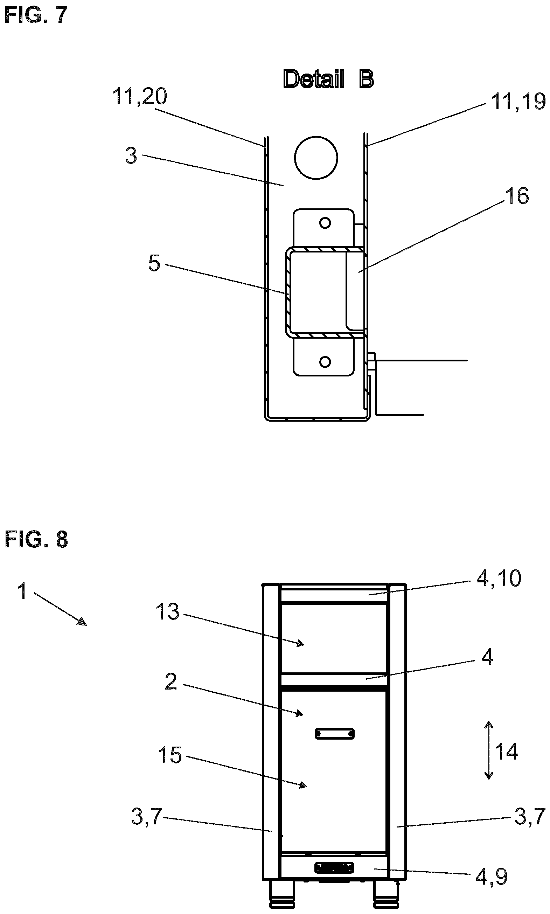

Die Fig. 7 zeigt das in Fig. 6 gekennzeichnete Detail B, d.h. einen Ausschnitt des in Fig. 6 gezeigten Horizontalschnitts, wobei nochmal deutlicher zu sehen ist, dass das zumindest eine Aussteifungsprofil 5 einen U-förmigen Querschnitt aufweisen kann, in welchem eine Beleuchtung 16 angeordnet sein kann.

Die Fig. 8 zeigt ein zweites Ausführungsbeispiel eines erfindungsgemäßen Temperierschranks 1, wobei bei diesem Ausführungsbeispiel die obige Beschreibung des ersten Ausführungsbeispiels soweit anwendbar auch hier gilt.

Dieses zweite Ausführungsbespiel kennzeichnet sich vor allem dadurch, dass der Innenraum 2 zumindest einen, insbesondere vom Wärmebereich 13 verschiedenen, Kühlbereich 15 aufweist, welcher in in der Betriebsstellung vertikale Richtung 14 oben und unten durch jeweils eine Horizontalebene 4 begrenzt ist, und wobei der Kühlbereich 15 zur Aufnahme zumindest eines Kühlschranks ausgebildet ist und/oder zumindest einen Kühlschrank enthält.

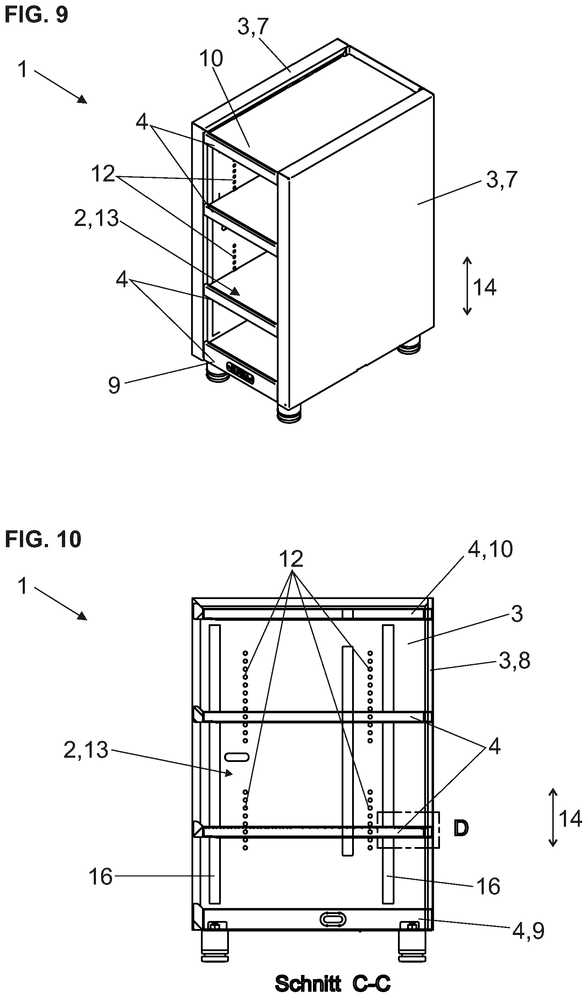

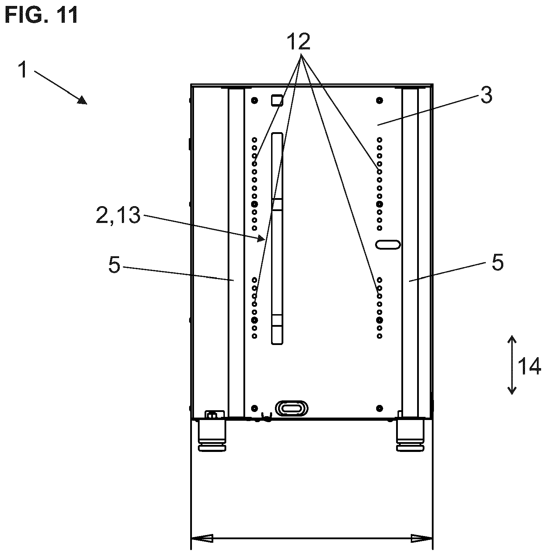

Die Fig. 9-11 zeigen ein drittes Ausführungsbeispiel eines erfindungsgemäßen Temperierschranks 1, welches sich von den vorherigen Ausführungsbeispielen insbesondere durch eine andere Ausbildung der Höhenverstellvorrichtung 12 unterscheidet.

Hier umfasst die Höhenverstellvorrichtung 12 in den Seitenwänden 7 vertikal versetzt beabstandete Bohrungen, in welche Verbindungsmittel wie z.B. Schrauben eingeführt sind und mit den zumindest zwei Horizontalebenen 4 lösbar verbunden sind.

Des Weiteren weist die Höhenverstellvorrichtung 12 bei diesem Ausführungsbeispiel einen größere vertikale Längserstreckung auf, sodass die Horizontalebenen 4 günstigerweise über einen größeren Bereich höhenverstellbar sind.

Abgesehen von der unterschiedlich ausgebildeten Höhenverstellvorrichtung 12 zeigen die Fig. 9-11 im Wesentlichen die in den Fig. 1, 3 und 5 gezeigten Merkmale in Bezug auf das erste Ausführungsbeispiel.

Die drei gezeigten und beschriebenen Ausführungsbeispiele weisen jeweils eine offene vertikale Vorderseite auf. Grundsätzlich kann der Innenraum 2 aber auch zumindest in einem Teilbereich einer vertikalen Außenseite, welche nicht durch Vertikalwände 3 begrenzt ist, eine Tür aufweisen.

### Bezugszeichenliste:

- 1: Temperierschrank
- 2: Innenraum
- 3: Vertikalwände
- 4: Horizontalebenen
- 5: Aussteifungsprofil
- 6: Heizelement
- 7: Seitenwände
- 8: Rückwand
- 9: Bodenebene
- 10: Dachebene
- 11: Bleche
- 12: Höhenverstellvorrichtung
- 13: Wärmebereich
- 14: vertikale Richtung
- 15: Kühlbereich
- 16: Beleuchtung
- 17: oberes Blech
- 18: unteres Blech
- 19: inneres Blech
- 20: äußeres Blech

## Patentansprüche

1. Temperierschrank (1) zum Warmhalten von Geschirr, mit einem Innenraum (2), wobei der Innenraum (2) in einer Betriebsstellung des Temperierschranks (1) umseitig durch zumindest zwei Vertikalwände (3) begrenzt ist, und wobei sich zwischen den Vertikalwänden (3) zumindest zwei Horizontalebenen (4) erstrecken und lösbar mit den Vertikalwänden (3) verbunden sind, wobei die Vertikalwände (3) und die Horizontalebenen (4) mit einer Doppelwandung ausgebildet sind, wobei an zumindest einer der zumindest zwei Horizontalebenen (4) zumindest ein Heizelement (6) angeordnet ist, **dadurch gekennzeichnet, dass** das zumindest eine Heizelement (6) an der jeweiligen Horizontalebene (4) angeklebt ist.

2. Temperierschrank (1) nach Anspruch 1, wobei das zumindest eine Heizelement (6) ein Folienheizelement ist.

3. Temperierschrank (1) nach einem der vorhergehenden Ansprüche, wobei die zumindest zwei Vertikalwände (3) zumindest zwei zueinander parallele Seitenwände (7) und vorzugsweise eine den Innenraum begrenzende Rückwand (8), welche mit den zwei Seitenwänden (7), vorzugsweise rechtwinklig, verbunden ist, sind.

4. Temperierschrank (1) nach einem der vorhergehenden Ansprüche, wobei eine Horizontalebene (4) der zumindest zwei Horizontalebenen (4) eine in der Betriebsstellung des Temperierschranks (1) den Innenraum (2) unten begrenzende Bodenebene (9) ist und/oder wobei eine Horizontalebene (4) der zumindest zwei Horizontalebenen (4) eine in der Betriebsstellung des Temperierschranks (1) den Innenraum (2) oben begrenzende Dachebene (10) ist.

5. Temperierschrank (1) nach einem der vorhergehenden Ansprüche, wobei an jeder Vertikalwand (3) zumindest ein sich in der Betriebsstellung des Temperierschranks (1) vertikal erstreckendes Aussteifungsprofil (5) zur Lastübertragung angeordnet ist, vorzugsweise wobei das zumindest eine Aussteifungsprofil (5) genau vier Aussteifungsprofile (5) ist und/oder innerhalb der Doppelwandung der Vertikalwände (3), insbesondere der Seitenwände (7), angeordnet ist.

6. Temperierschrank (1) nach Anspruch 5, wobei das zumindest eine Aussteifungsprofil (5)
- einen Omega-förmigen und/oder U-förmigen Querschnitt aufweist und/oder
- CNC-gelasert ist und/oder
- sich über eine Gesamthöhe zumindest einer Vertikalwand (3) erstreckt.

7. Temperierschrank (1) nach einem der vorhergehenden Ansprüche, wobei die Doppelwandung der Vertikalwände (3) und Horizontalebenen (4) aus zwei voneinander beabstandete Bleche (11) gebildet ist, wobei die Bleche (11) und vorzugsweise das zumindest eine Aussteifungsprofil (5) aus Edelstahl gefertigt sind.

8. Temperierschrank (1) nach einem der vorhergehenden Ansprüche, wobei die zumindest zwei Horizontalebenen (4) in in der Betriebsstellung vertikale Richtung (14) höhenverstellbar sind, insbesondere wobei die Vertikalwände (3), vorzugsweise die Seitenwände (7), eine Höhenverstellvorrichtung (12) aufweisen, mit welcher die Horizontalebenen (4) lösbar verbindbar sind.

9. Temperierschrank (1) nach einem der vorhergehenden Ansprüche, wobei der Innenraum (2) einen Wärmebereich (13) aufweist, welcher in in der Betriebsstellung vertikale Richtung (14) oben und unten durch jeweils eine Horizontalebene (4) begrenzt ist und optional durch zumindest eine weitere Horizontalebene (4) in Teilwärmebereiche unterteilt oder unterteilbar ist, wobei an zumindest einer der Horizontalebenen (4) jeweils zumindest ein Heizelement (6) angebracht ist.

10. Temperierschrank (1) nach einem der vorhergehenden Ansprüche, wobei der Innenraum (2) zumindest einen, insbesondere vom Wärmebereich (13) verschiedenen, Kühlbereich (15) aufweist, welcher in in der Betriebsstellung vertikale Richtung (14) oben und unten durch jeweils eine Horizontalebene (4) begrenzt ist, wobei der Kühlbereich (15) zur Aufnahme zumindest eines Kühlschranks ausgebildet ist und/oder zumindest einen Kühlschrank enthält.

11. Temperierschrank (1) nach einem der vorhergehenden Ansprüche, wobei der Temperierschrank (1) dazu ausgebildet ist, eine Oberflächentemperatur der zumindest zwei Horizontalebenen (4) auf zwischen 60 und 80°C, vorzugsweise zwischen 66 und 70°C, besonders bevorzugt auf 68°C, zu halten.

12. Temperierschrank (1) nach einem der vorhergehenden Ansprüche, wobei der Innenraum (2) vier in in der Betriebsstellung vertikale Richtung (14) begrenzende vertikale Außenseiten aufweist, wobei genau drei der vier vertikalen Außenseiten durch Vertikalwände (3) begrenzt sind.

13. Temperierschrank nach einem der vorhergehenden Ansprüche, wobei der Innenraum (2) zumindest eine Beleuchtung (16), insbesondere zumindest ein LED-Leuchtband, aufweist, vorzugsweise welche an dem zumindest einen Aussteifungsprofil (5) angebracht ist, besonders bevorzugt in Längsrichtung des Aussteifungsprofils (5) innerhalb eines dreiseitig umschlossenen Bereichs des Omega- und/oder U-förmigen Querschnitts angeklebt ist.

14. Temperierschrank (1) nach einem der vorhergehenden Ansprüche, wobei der Innenraum (2) zumindest in einem Teilbereich einer vertikalen Außenseite, welche nicht durch Vertikalwände (3) begrenzt ist, eine Tür aufweist.

15. Temperierschrank (1) nach einem der vorhergehenden Ansprüche, wobei der Temperierschrank (1) eine Steuer- oder Regeleinheit aufweist oder mit einer Steuer- oder Regeleinheit verbindbar ist, wobei die Steuer- oder Regeleinheit dazu konfiguriert ist, das zumindest eine Heizelement (6), insbesondere in Abhängigkeit eines Volumens und/oder eines Inhalts des Innenraums (2) und/oder zumindest eines Teilbereichs des Innenraums (2), und vorzugsweise die Beleuchtung (16) zu steuern oder zu regeln.
